# EUROPÄISCHE PATENTANMELDUNG

(11) **EP 2 336 743 A1**
(43) Veröffentlichungstag der Anmeldung: **22.06.2011**
(21) Anmeldenummer: 09015598.7
(22) Anmeldetag: 17.12.2009
(51) Int. Cl.: G01M 3/00, G01M 3/18, G01M 3/28, F16J 15/32, F16J 15/447

(54) **Dichtungsanordnung**

(60) Teilanmeldung: 11000802.6
(71) Anmelder: Carl Freudenberg KG, 69469 Weinheim (DE)
(72) Erfinder: Schreiner, Marcel, 68259 Mannheim (DE); Diekmann, Hans-Jürgen, 69488 Birkenau (DE); Mutterer, Heinz, 76532 Baden-Baden (DE)

(57) **Zusammenfassung**

Dichtungsanordnung, umfassend zwei Maschinenelemente (1, 2) und eine Dichtung (3), die zwischen den Maschinenelementen (1, 2) dichtend angeordnet ist, wobei die Dichtung (3) zwei gegeneinander abzudichtende Räume (4, 5) begrenzt, die jeweils mit einem abzudichtenden Medium (6, 7) zumindest teilweise gefüllt sind, wobei in dem ersten Raum (4) ein relativ höherer Druck als in dem 2. Raum (5) herrscht und wobei auf der dem zweiten Raum (5) zugewandten Seite der Dichtung (3) ein Modul (8) zur Erfassung einer Leckage (9) der Dichtung (3) angeordnet ist. Das Modul (8) umfasst einen drosselartig ausgebildeten Strömungskanal (10) für die Leckage (9) und zumindest einen Sensor (11) zur Erfassung der Leckage (9) im Strömungskanal (10), wobei der Sensor (11) mit einer Auswerte-Einheit (12) signalleitend verbunden ist.

## Beschreibung

### Technisches Gebiet

Die Erfindung betrifft eine Dichtungsanordnung, umfassend zwei Maschinenelemente und eine Dichtung, die zwischen den Maschinenelementen dichtend angeordnet ist, wobei die Dichtung zwei gegeneinander abzudichtende Räume begrenzt, die jeweils mit einem abzudichtenden Medium zumindest teilweise gefüllt sind, wobei in dem ersten Raum ein relativ höherer Druck als in dem zweiten Raum herrscht und wobei auf der dem zweiten Raum zugewandten Seite der Dichtung ein Modul zur Erfassung einer Leckage der Dichtung angeordnet ist.

### Stand der Technik

Eine solche Dichtungsanordnung mit Leckageerfassung ist aus der EP 1 916 509 A1 bekannt. Das erste Medium im ersten Raum ist durch eine Gleitringdichtung und das zweite Medium im zweiten Raum durch einen Radialwellendichtring abgedichtet, wobei die Gleitringdichtung und der Radialwellendichtring eine abzudichtende Oberfläche des ersten Maschinenelements dichtend umschließen. Axial zwischen den einander benachbart zugewandten Stimseiten von Gleitringdichtung und Radialwellendichtring ist ein Modul in Form eines weiteren Dichtrings angeordnet, wobei zur Detektierung einer Leckage der Glekringdichtung und / oder des weiteren Dichtrings eine Leckagesensor und ein Leckagereservoir vorgesehen sind. Das Leckagereservoir ist durch eine Vliesstoffscheibe gebildet, die im Wesentlichen konzentrisch zur abzudichtenden Oberfläche des ersten Maschinenelements angeordnet ist. Leckage wird durch das Leckagereservoir aufgenommen, durch den Leckagesensor detektiert und durch den Leckagesensor optisch und / oder akustisch angezeigt. In einer elektronischen Auswerte-Einheit wird ein elektrisches Signal erzeugt. Dabei ist allerdings zu beachten, dass das durch die Vliesstoffscheibe gebildete Leckagereservoir nur einmal verwendbar ist. Ist das Leckagereservoir vollgesaugt, muss das gesamte Sensorsystem ausgetauscht werden.

### Darstellung der Erfindung

Der Erfindung liegt die Aufgabe zugrunde, eine Dichtungsanordnung der vorbekannten Art derart weiter zu entwickeln, dass zur Detektierung der Leckage auf ein saugfähiges Leckagedepot verzichtet werden kann und dass ein zur Erfassung einer Leckage verwendetes Modul kontinuierlich verwendbar ist, auch dann, wenn zuvor Leckage durch das Modul bereits delektiert worden ist.

Außerdem sollen auf einfache Weise auch Aussagen über den Grad der Dichtungsschädigung getroffen werden können. Ein leckagefreier Raum in der Dichtungsanordnung zur Detektierung der Leckage soll nicht erforderlich sein. Außerdem soll die beanspruchte Dichtungsanordnung für eine Dichtfunktionsüberwachung bei Abdichtung zwischen mehreren Fluiden geeignet sein.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist es vorgesehen, dass das Modul einen drosselartig ausgebildeten Strömungskanal für die Leckage umfasst und zumindest einen Sensor zur Erfassung der Leckage im Strömungskanal und dass der Sensor mit einer Auswerte-Einheit signalleitend verbunden ist. Ein die Gebrauchsdauer der Dichtungsanordnung beschränkendes, saugfähiges Leckagedepot gelangt nicht zur Anwendung. Auftretende Leckage wird demgegenüber durch die Strömung der Leckage durch den drosselartig ausgebildeten Strömungskanal detektiert. Dieser Strömungskanal dient dabei nicht als Leckagedepot, sondern dem kontrollierten Transport der Leckage und dem Aufbau einer Kenngröße für die Leckagemenge. Eine solche Kenngröße für die Leckagemenge kann der Differenzdruck innerhalb des Strömungskanals zwischen Strömungseingang und Strömungsausgang sein. Strömungsgeschwindigkeit, -richtung sowie Differenzdruck definieren damit die Stärke der Leckage und erlauben Rückschlüsse auf den Grad der Dichtungsschädigung. Sowohl Strömungsgeschwindigkeit als auch Strömungsrichtung können, wie später näher erläutert wird, ausgewertet werden.

Die erfindungsgemäße Dichtungsanordnung ist geeignet, wenn innerhalb der beiden Räume jeweils ein Fluid angeordnet ist, beispielsweise im ersten Raum mit dem relativ höheren Druck Motoröl und im zweiten Raum mit dem relativ niedrigeren Druck Getriebeöl. Im ersten Raum herrscht dann zum Beispiel ein Absolutdruck von etwa 2 bis 5 bar, im zweiten Raum demgegenüber ein Absolutdruck von etwa 1 bar. Die Erfassung der Leckage und deren Detektierung finden im Strömungskanal statt. Das Modul weist auch während einer langen Gebrauchsdauer keinerlei Verschleiß auf, ist wartungsfrei und unverändert stets wiederverwendbar. Die Leckage wird gleichbleibend gut während einer langen Gebrauchsdauer erfasst.

Je nach Ausgestaltung des Moduls kann ein leckagemengeabhängiges Ansprechen des Systems zum Beispiel über die Geometrie des Strömungskanals eingestellt werden, ebenso wie ein leckagerichtungsabhängiges Ansprechen des Überwachungssystems.

Verwendung findet die beanspruchte Dichtungsanordnung bevorzugt im Dichtsystem eines Hydraulikmotors zwischen Motor und Getriebe.

Zu einer präzisen Erfassung der Leckage, insbesondere der Strömungsgeschwindigkeit und/oder der Strömungsrichtung, ist es vorteilhaft, wenn der Strömungskanal eine möglichst große Länge aufweist. Da jedoch die Einbauräume in ihren Abmessungen häufig begrenzt sind und Dichtungsanordnungen kompakte Abmessungen möglichst in allen Richtungen aufweisen sollen, ist von Vorteil, wenn der Strömungskanal zwischen einem Strömungseingang und einem Strömungsausgang mäanderförmig ausgebildet ist. Durch die mäanderförmige Ausgestaltung wird bei äußerlich kompakten Abmessungen ein langer Strömungskanal erreicht. Davon abweichend besteht die Möglichkeit, dass der Strömungskanal zum Beispiel spiralförmig ausgebildet ist. Auch hier wird bei äußerlich kompakten Abmessungen ein langer Strömungskanal erreicht.

Nach einer ersten Ausgestaltung kann es vorgesehen sein, dass der Sensor durch einen kalorimetrischen Durchfluss-Sensor gebildet ist. Die Messung der Durchfluss-Menge der flüssigen Leckage durch den Strömungskanal erfolgt mittels einer Heizung mit Hilfe einer Temperaturdifferenzmessung. Eine solche berührungslose Messung ist praktisch unabhängig von der Art der flüssigen Leckage; die chemischen Eigenschaften des Leckagemediums beeinflussen die Erfassung der Leckage nicht.

Der Durchfluss-Sensor umfasst zumindest zwei in Strömungsrichtung der Leckage beabstandete Temperatursensoren. Die Temperatursensoren befinden sich dabei jeweils in einem guten wärmeleitenden Kontakt mit der Leckage, die durch den Strömungskanal fließt, wobei die beiden Temperatursensoren gleichzeitig gegeneinander gut wärmeisoliert sind. Definierte Strömungsverhältnisse durch den Strömungskanal werden maßgeblich über die Kanalbreite eingestellt. Im Leckage-Fall strömt die Leckage durch den Strömungskanal und erzeugt dadurch ein charakteristisches Temperaturprofil zwischen den beiden Temperatursensoren.

Die Lage der Temperatursensoren befindet sich zum Beispiel in der Nähe des Strömungsausgangs oder in der Nähe des Strömungseingangs. Für die Detektierung der Leckage sind beide Positionen gleichermaßen geeignet.

Nach einer vorteilhaften Ausgestaltung kann es vorgesehen sein, dass der Durchfluss-Sensor einen elektrisch beheizbaren Hitzdraht umfasst, der in Strömungsrichtung zwischen den Temperatursensoren angeordnet ist. Durch den Hitzdraht wird ein symmetrisches Temperaturprofil erzeugt, das im Fall einer Leckage, die durch den Strömungskanal strömt, verschoben wird. Die Größe der Verschiebung ist abhängig von der Richtung und der Strömungsgeschwindigkeit der Leckage. Das Funktionsprinzip ist das eines kalorimetrischen Durchflussmessers zum Beispiel für die Kühl- und Schmiermittelüberwachung in der Stahlindustrie.

Die Intensität der Leckage ist eine Funktion des Temperaturgradienten zwischen mehreren Temperatursensoren. Die zuvor beschriebene erste Ausgestaltung ermöglicht eine kontinuierliche Überwachung der Leckage vom ersten Raum an der Dichtung vorbei in Richtung des zweiten Raums.

Eine weiter verbesserte Messgenauigkeit und damit verbesserte Kenntnisse über den Grad der Dichtungsschädigung können dadurch erzielt werden, dass der Durchfluss-Sensor drei in Strömungsrichtung beabstandete Temperatursensoren umfasst und dass zwischen den einander benachbarten Temperatursensoren jeweils ein Hitzdraht angeordnet ist. Die Änderung der Temperaturdifferenz zwischen den Temperatursensoren ist ein Maß für die Strömungsgeschwindigkeit der Leckage. Je mehr Temperatursensoren zur Anwendung gelangen, desto genauer ist das Temperaturprofil. Durch das genauere Temperaturprofil ist die Leckagemenge genauer bestimmbar. Für übliche Anwendungen sind die zuvor genannten drei Temperatursensoren ausreichend. Dadurch ist ein gutes Verhältnis zwischen Nutzen und Aufwand gegeben.

Die Verwendung eines Hitzdrahts ist von Vorteil, um eine gute Auflösung und dadurch ein genaueres Messergebnis zu erreichen.

Für manche Anwendungen kann es ausreichend sein, auf einen Hitzdraht zu verzichten. Dem einfacheren und kostengünstigeren Aufbau steht ein etwas ungenaueres Meßergebnis gegenüber.

Nach einer anderen Ausgestaltung kann es vorgesehen sein, dass der Sensor als druckbetätigbare Klappe ausgebildet ist, wobei die Klappe bei Überschreitung eines Druck-Schwellwerts im Strömungskanal in Offenstellung bringbar ist. Abweichend vom zuvor beschriebenen Ausführungsbeispiel strömt in diesem Ausführungsbeispiel im Leckage-Fall die Leckage durch den Strömungskanal und erzeugt dadurch einen Druckabfall beziehungsweise Druckaufbau im Strömungskanal. Die mechanische Klappe ist drucksensitiv. Übersteigt der Druck innerhalb des Strömungskanals einen kritischen Druck-Schwellwert, öffnet die Klappe, gibt dadurch einen Strömungskurzschluss frei, wobei die geöffnete Klappe von der Auswerte-Einheit erfasst und angezeigt wird. Die Intensität der Leckage ist eine digitale Funktion des Differenzdrucks zwischen Strömungskanal und zweitem Raum.

Wird die beschädigte Dichtung gegen eine neue ausgetauscht und mit dem alten Modul in der so reparierten Dichtungsanordnung anschließend weiter betrieben, wird der Druck-Schwellwert im Strömungskanal durch das Fehlen der Leckage oder eine nur geringe Leckage nicht überschritten und die druckbetätigbare Klappe bleibt in Geschlossenstellung. Das ist ein Hinweis darauf, dass die Dichtungsanordnung ordnungsgemäß funktioniert.

Nach einer anderen Ausgestaltung kann der Sensor als Differenzdrucksensor ausgebildet sein. In einem solchen Fall gibt der Differenzdruck zwischen Strömungseingang und Strömungsausgang einen Hinweis auf die Intensität der Leckage. Wie auch bei den zuvor beschriebenen Ausführungsbeispielen können Strömungsgeschwindigkeit und Strömungsrichtung der Leckage detektiert werden. Der Differenzdruck ist proportional zur Strömungsgeschwindigkeit. Je mehr Leckage strömt, desto größer ist der Druckaufbau im Strömungskanal. Die Strömungsrichtung ergibt sich über das Vorzeichen des Differenzdrucks.

Wie auch im eingangs beschriebenen Ausführungsbeispiel "kalorimetrischer Durchfluss-Sensor" erfolgt die Überwachung der Leckage durch den Differenzdrucksensor kontinuierlich.

Die Klappe oder der Differenzdrucksensor können jeweils im Bereich des Strömungsausgangs des Strömungskanals angeordnet sein. Die Position der Klappe kann beliebig angeordnet werden. Der Differenzdrucksensor muss zwischen Strömungsein- und Strömungsausgang messen.

Nach einer weiteren Ausgestaltung kann der Sensor als differenzdruckgesteuerte Membran mit Wegsensor ausgebildet sein, wobei die Membran in Richtung des Wegsensors hin- und herbeweglich ausgebildet und dem Wegsensor zur Erfassung des Wegs der Membran benachbart zugeordnet ist. Die Membran kann aus einem elastisch nachgiebigen Werkstoff bestehen, beispielsweise aus einem elastomeren Werkstoff. Solche Werkstoffe sind in großer Anzahl mit unterschiedlichsten Gebrauchseigenschaften kostengünstig verfügbar. Die Gebrauchseigenschaften können dadurch besonders leicht an die jeweiligen Gegebenheiten des Anwendungsfalls angepasst werden.

Die differenzdruckgesteuerte Membran ist bevorzugt ein integraler Bestandteil der Dichtung, wobei sich die Bewegung/Durchbiegung der Membran in Abhängigkeit des Differenzdrucks zwischen den beiden Räumen verändert. Bei einer Leckage des abzudichtenden Mediums aus dem abzudichtenden ersten Raum mit dem vergleichsweise höheren Druck sorgt diese Leckage für eine Druckentlastung im ersten Raum und einen Druckanstieg im zweiten Raum, der mit dem vergleichsweise geringen Druck beaufschlagt ist. Durch diese Druckveränderung zwischen den beiden Räumen, die auch auf die Membran wirkt, bewegt sich im geschilderten Fall die Membran in Richtung des ersten Raums von dem Wegsensor weg. Dieser sich verändemde Abstand wird vom Wegsensor erfasst und an die Auswerte-Einheit übermittelt. Die Intensität der Leckage ist eine Funktion des Abstands zwischen dem Wegsensor, der beispielsweise durch einen optischen Sensor gebildet sein kann, und der Membran. Die Überwachung der Leckage erfolgt dabei kontinuierlich.

Die Dichtung kann als Radialwellendichtring ausgebildet sein, wobei die Membran im Radialflansch des Radialwellendichtrings angeordnet ist. Für viele Anwendungsfälle sind Radialwellendichtringe in vielen Abmessungen kostengünstig verfügbar. Für die Membran wird kein zusätzlicher Bauraum benötigt und auch der Montageaufwand unterscheidet sich von dem Montageaufwand von Radialwellendichtringen ohne differenzdruckgesteuerte Membran nicht.

Häufig ist es für den Betreiber einer Dichtungsanordnung nicht nur interessant, eventuell auftretende Leckage innerhalb der Dichtungsanordnung zu detektieren, um Rückschlüsse auf den Grad der Dichtungsschädigung ziehen zu können, sondem auch die Erfassung von Drehzahl, Drehrichtung, Absolutwinkel und / oder Drehmoment ist häufig von Interesse.

Das Modul kann deshalb mit einem Multipolencoder basierten Geber und / oder einem zugehörigen Magnetfeldsensor eine vormontierbare erste Einheit bilden.

Geber und / oder Magnetfeldsensor können auf der dem zweiten Raum zugewandten Seite des Moduls angeordnet sein. Diese dem zweiten Raum zugewandte Seite des Moduls ist die Niederdruckseite.

Generell kann der Magnetfeldsensor dem Geber in radialer oder axialer Richtung zugeordnet sein. Häufig ist bei den genannten Dichtungsanordnungen der Bauraum in axialer Richtung begrenzt, wobei in radialer Richtung ohnehin Abmessungen vorgesehen sind, die zur Montage der Dichtung, insbesondere des Radialwellendichtrings ausreichen müssen.

Unter Berücksichtigung der Vorgabe "geringe Abmessungen in axialer Richtung" ist der Geber vom Magnetfeldsensor bevorzugt außenumfangsseitig mit radialem Abstand umschlossen.

Der Geber kann zur Erfassung von Drehzahl, Drehrichtung, Absofutwinkel und / oder Drehmoment ausgebildet sein.

Das Modul und die Dichtung können eine vormontierbare zweite Einheit bilden. Hinsichtlich einer einfachen Montage der Dichtungsanordnung und im Hinblick auf eine Reduzierung der Gefahr von Montagefehlem hat sich eine Zusammenfassung zu einer vormontierbaren Einheiten als vorteilhaft erwiesen, insbesondere dann, wenn nicht nur das Modul mit dem Geber und / oder dem zugehörigen Magnetfeldsensor eine vormontierbare erste Einheit bildet, sondern auch, wenn zusätzlich zu den genannten Bauteilen die Dichtung vorgesehen ist, die die erste Einheit zur vormontierbaren zweiten Einheit komplettiert.

### Kurzbeschreibung der Zeichnung

Fünf Ausführungsbeispiele der beanspruchten Dichtungsanordnung sind nachfolgend anhand der Figuren 1 bis 5 schematisch dargestellt und werden im Folgenden näher beschrieben.

Es zeigen:
- Fig. 1: eine erstes Ausführungsbeispiel, bei dem der Sensor durch einen kalorimetrischen Durchfluss-Sensor gebildet ist,
- Fig. 2: eine Dichtungsanordnung, ähnlich der Dichtungsanordnung aus Fig. 1, wobei als Sensor eine druckbetätigbare Klappe zur Anwendung gelangt,
- Fig. 3: ein drittes Ausführungsbeispiel, ähnlich dem Ausführungsbeispiel aus Fig. 1, wobei der Sensor als Differenzdrucksensor ausgebildet ist,
- Fig. 4: ein viertes Ausführungsbeispiel, bei dem der Sensor als differenzdruckgesteuerte Membran mit Wegsensor ausgebildet ist und
- Fig. 5: ein fünftes Ausführungsbeispiel, bei dem ein Modul entsprechend den Fig. 1 bis 4 zur Anwendung gelangen kann, wobei das Modul mit einem Multipolencoder basierten Geber und / oder einem zugehörigen Magnetfeldsensor eine vormontierbare erste Einheit bildet und die erste Einheit zusammen mit der Dichtung die zweite Einheit.

### Ausführung der Erfindung

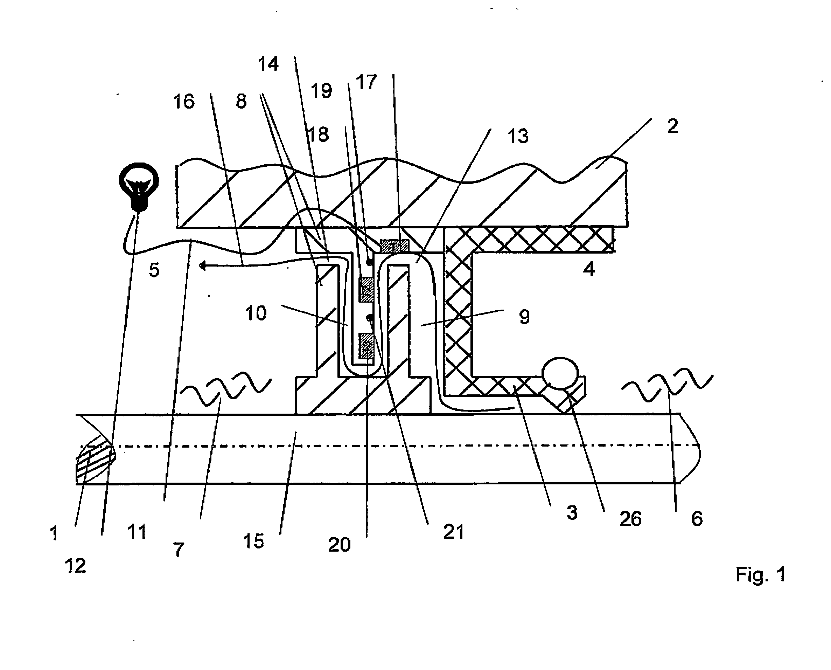

In den Fig. 1 bis 5 ist jeweils ein Ausführungsbeispiel der erfindungsgemäßen Dichtungsanordnung gezeigt. Die Dichtung 3 ist als Radialwellendichtring 26 ausgebildet und zwischen den beiden Maschinenelemnten 1, 2 dichtend angeordnet. Das erste Maschinenelement 1 wird durch eine Welle gebildet, das zweite Maschinenelement 2 von einem Gehäuse, das das erste Maschinenelement 1 mit radialem Abstand umschließt. Der erste abzudichtende Raum 4 befindet sich motorseitig der Dichtung 3, der zweite abzudichtende Raum 5 getriebeseitig der Dichtung 3, wobei der motorseitige erste Raum 4 mit Motoröl, der getriebeseitig angeordnete zweite Raum 5 mit Getriebeöl gefüllt ist. Der motorseitige erste Raum 4 ist mit höheren Druck beaufschlagt als der getriebeseitige zweite Raum 5. Beispielsweise beträgt der Druck im ersten Raum 4 3 bar, im zweiten Raum 5 1 bar.

Auf der dem zweiten Raum 5 axial zugewandten Seite der Dichtung 3 ist das Modul 8 zur Erfassung einer Leckage 9 der Dichtung 3 angeordnet. Dieses Modul 8 umfasst in den Fig. 1 bis 3 und 5 jeweils einen drosselafig ausgebildeten, mäanderförmigen Strömungskanal 10, mit einem Strömungseingang 13 und einen Strömungsausgang 14. Abweichend davon, kann der Strömungskanal 10 zum Beispiel auch spiralförmig ausgebildet sein. Die Leckage 9, die sich durch den Strömungskanal 10 bewegt, wird von dem Sensor 11 erfasst, wobei dieser Sensor 11 mit einer Auswerte-Einheit 12 signalleitend verbunden ist.

In Fig. 1 ist der Sensor 11 durch einen kalorimetrischen Durchfluss-Sensor 15 gebildet. Dieser umfasst drei in Strömungsrichtung 16 der Leckage 9 zueinander beabstandete Temperatursensoren 17, 18, 20, wobei zwischen den einander benachbarten Temperatursensoren 17, 18, 20 jeweils ein Hitzdraht 19, 21 angeordnet ist.

Im Leckage-Fall strömt abzudichtendes Medium 6 aus dem ersten Raum 4 durch den Strömungskanal 10 und erzeugt dadurch ein charakteristisches Temperaturprofil zwischen den einzelnen Temperatursensoren 17, 18, 20. Die Sensitivität des Moduls 8 wird dadurch gesteigert, dass zwischen den Temperatursensoren 17, 18, 20 die Hitzdrähte 19, 21 angeordnet sind.

Die Auswertung erfolgt durch Bildung der Temperaturdifferenz zwischen einander benachbarten Temperatursensoren 17, 18, 20, wobei die Höhe der Temperaturdifferenz proportional zur Strömungsgeschwindigkeit der Leckage und das Vorzeichen des Differenzdrucks proportional zur Strömungsrichtung der Leckage ist.

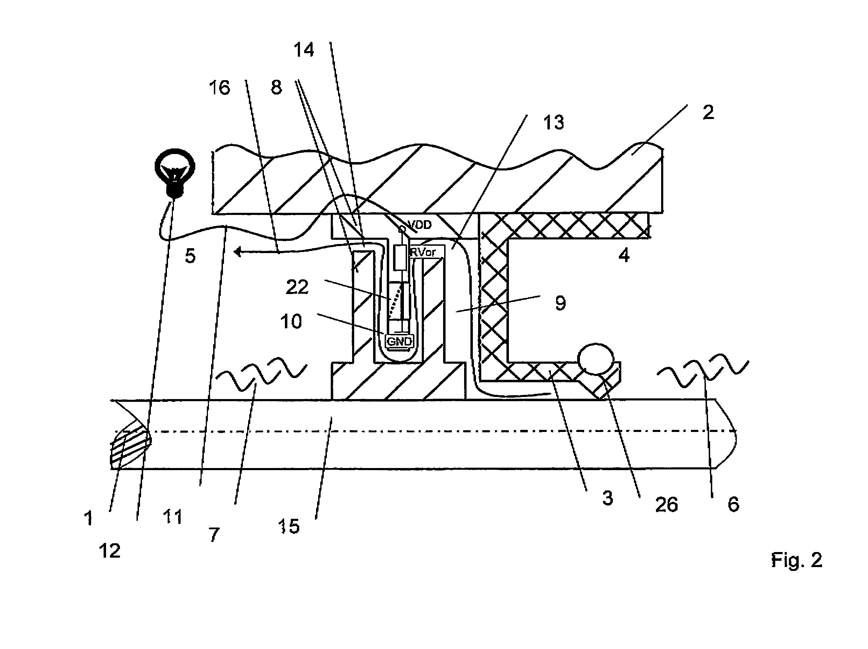

In Fig. 2 ist eine Dichtungsanordnung gezeigt, die sich von der Dichtungsanordnung aus Fig. 1 durch die Ausgestaltung des Moduls 8 unterscheidet. Anstelle der Temperatursensoren und der Hitzdrähte gelangt in diesem Ausführungsbeispiel eine druckbetätigbare Klappe 22 zur Anwendung, die bei Überschreitung eines Druck-Schwellwerts im Strömungskanal 10 in Offenstellung bringbar ist. Die Stellung der drucksensitiven mechanischen Klappe 22 wird überwacht. Die Intensität der Leckage 9 ist eine digitale Funktion des Differenzdrucks an der Klappe 22 zwischen dem Druck im Strömungskanal 10 und dem Druck im zweiten Raum 5.

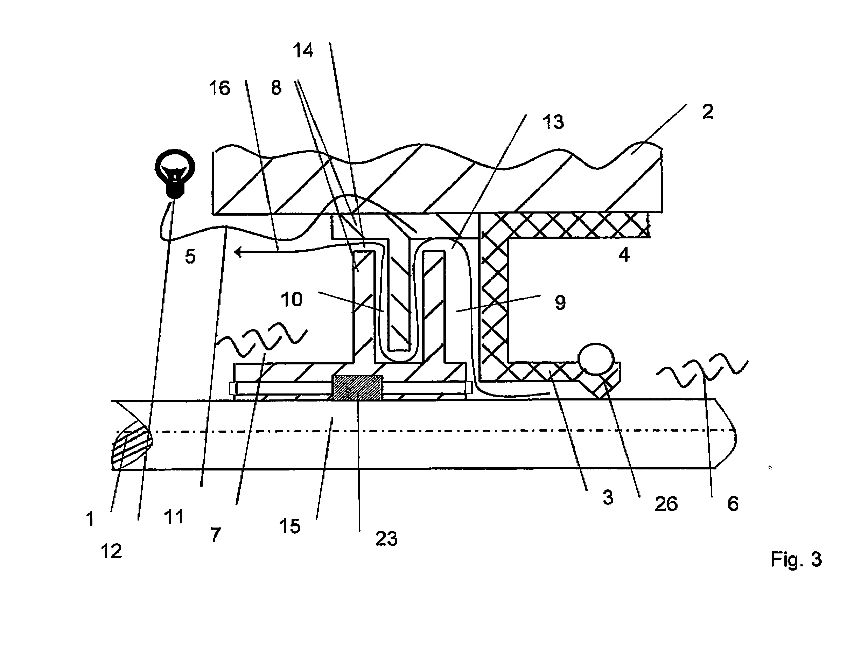

Die Strömungsgeschwindigkeit und die Strömungsrichtung werden durch die druckbetätigbare Klappe 22 digital detektiert. Wenn die Strömungsgeschwindigkeit im Strömungskanal 10 größer als der Schwellwert ist, ist die Klappe 22 offen. Ist demgegenüber die Strömungsgeschwindigkeit im Strömungskanal 10 kleiner als der Schwellwert, ist die Klappe 22 geschlossen. Im dritten Ausführungsbeispiel gemäß Fig. 3 ist eine kontinuierliche Überwachung des Differenzdrucks möglich, genau wie beim ersten Ausführungsbeispiel gemäß Fig. 1. Strömungsgeschwindigkeit und -richtung werden in diesem Ausführungsbeispiel durch einen als Sensor 11 ausgebildeten Differenzdrucksensor detektiert. Im Leckage-Fall strömt Leckage 9 durch den Strömungskanal 10 und erzeugt dadurch einen Druckabfall im Strömungskanal 10. Die Intensität der Leckage ist eine Funktion des Differenzdrucks zwischen dem Strömungseingang 13 und dem Strömungsausgang 14 des mäanderförmigen Strömungskanals 10. Die Strömungsgeschwindigkeit ist proportional zum Differenzdruck. Je mehr Leckage 9 durch den Strömungskanal 10 strömt, desto größer ist der Druckaufbau im Strömungskanal 10. Die Strömungsrichtung der Leckage 9 kann anhand des Vorzeichens des Differenzdrucks erfasst werden.

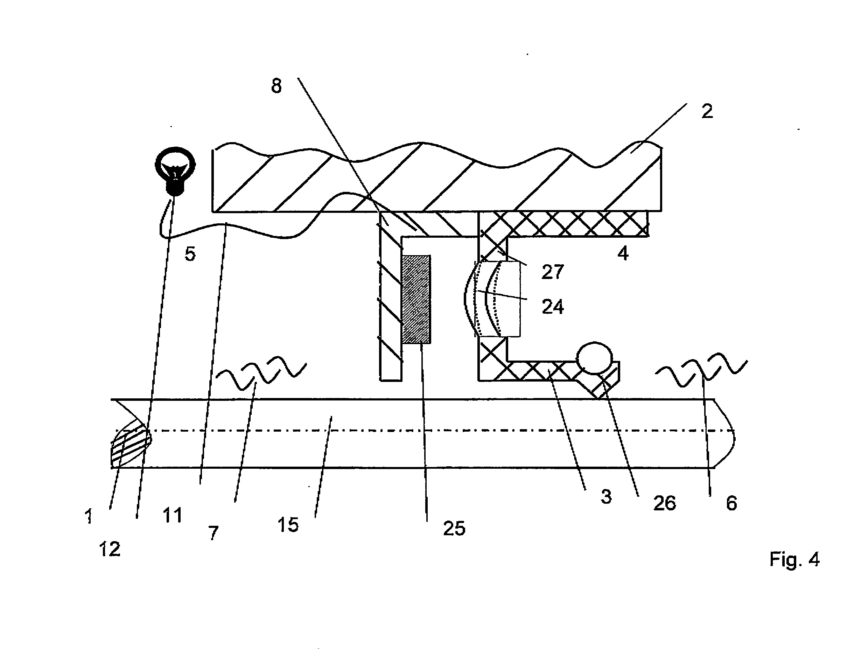

Fig. 4 zeigt ein viertes Ausführungsbeispiel. Auch hier ist ein Modul 8 zur Erfassung einer Leckage 9 der Dichtung 3 vorgesehen, wobei das Modul 8 eine differenzdruckgesteuerte Membran 24 und einen Wegsensor 25 umfasst, die einander mit axialem Abstand benachbart zugeordnet sind. Der Wegsensor 25 ist signalleitend mit der Auswerte-Einheit 12 verbunden, genau wie die Sensoren 11 in den Fig. 1 bis 3.

Im Normalfall, wenn die Dichtung 3 in Ordnung ist, ist die Druckdifferenz zwischen den beiden Räumen 4, 5 am Größten. Die Dichtung 3 weist keine Leckage auf. Dieser Betriebszustand ist mit durchgezogenen Linien gezeigt. Die Membran 24 ist axial in Richtung des Wegsensors 25 vorgewölbt und diesem am weitesten angenähert.

Wird die Dichtung 3 demgegenüber undicht, so dass eine Leckage 9 vom abzudichtenden Raum 4 höheren Drucks in Richtung des abzudichtenden Raums 5 niedrigeren Drucks strömt, verringert sich durch die Undichtigkeit die Druckdifferenz zwischen diesen beiden Räumen 4, 5. Die Membran 24, die im gezeigten Ausführungsbeispiel aus einem elastomeren Werkstoff besteht, nimmt die gestrichelt dargestellte Form an. Der sich vergrößernde axiale Abstand zwischen der Membran 24 und dem Wegsensor 25 wird von dem Wegsensor 25 erkannt und an die Auswerte-Einheit 12 weitergegeben. In Abhängigkeit vom axialen Abstand zwischen der Membran 24 und dem Wegsensor 25 erkennt der Betreiber der Dichtungsanordnung die Intensität der Leckage. Diese ist eine Funktion des Abstands zwischen Wegsensor 25, der beispielsweise als optischer Sensor ausgebildet sein kann, und der Membran 24. Die Überwachung der Dichtungsanordnung erfolgt kontinuierlich.

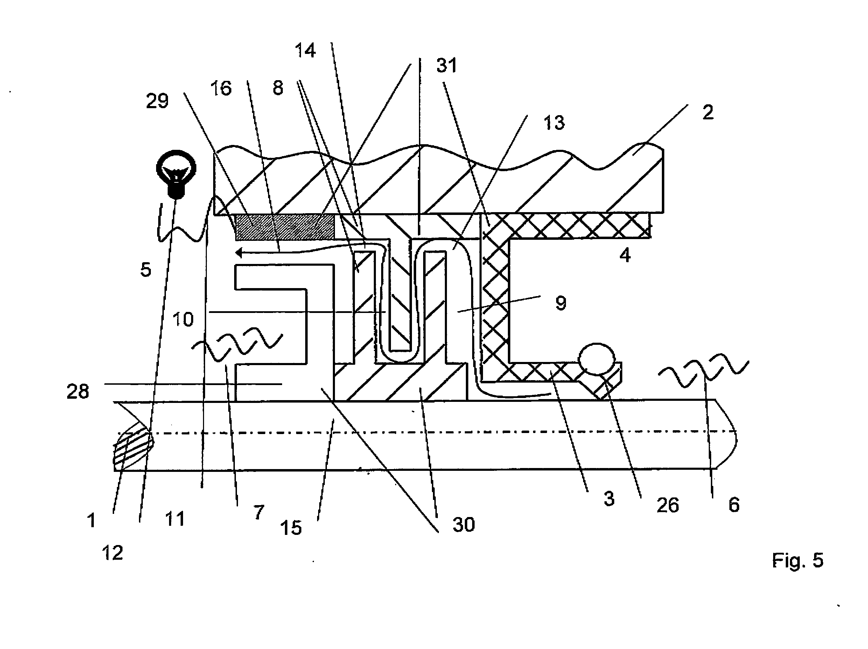

In Fig. 5 ist ein Ausführungsbeispiel gezeigt, das sich von den zuvor beschriebenen Ausführungsbeispielen Fig. 1 bis 4 dadurch unterscheidet, dass zusätzlich dazu ein Multipolencoder basierter Geber 28 und / oder ein zugehöriger Magnetfeldsensor 29 zur Anwendung gelangen, die mit dem Modul 8 eine vormontierbare erste Einheit 30 bilden.

Generell kann das Modul 8 genauso ausgebildet sein, wie Module 8 aus den Fig. 1 bis 4.

Eine solche Zusammenfassung aus Modul 8 und Geber 28 und / oder Magnetfeldsensor 29 zu einer vormontierbaren Einheit 30 bietet sich dann an, wenn zusätzlich zu der Detektierung der Leckage Drehzahl, Drehrichtung, Absolutwinkel und / oder Drehmoment der Dichtungsanordnung erfasst werden sollen.

Eine weiter vereinfachte Montage kann dadurch erreicht werden, dass die erste Einheit 30 mit der Dichtung 3 kombiniert wird, zur vormontierbaren zweiten Einheit 31.

Im hier gezeigten Ausführungsbeispiel wird der Geber 28 vom Magnetfeldsensor 29 mit radialem Abstand außenumfangsseitig umschlossen. Durch diese Zuordnung weist die erste Einheit 30 kompakte Abmessungen in axialer Richtung auf; generell besteht jedoch auch die Möglichkeit, dass der Magnetfeldsensor 29 dem Geber 28 mit axialem Abstand benachbart zugeordnet ist.

## Patentansprüche

1. Dichtungsanordnung, umfassend zwei Maschinenelemente (1, 2) und eine Dichtung (3), die zwischen den Maschinenelementen (1, 2) dichtend angeordnet ist, wobei die Dichtung (3) zwei gegeneinander abzudichtende Räume (4, 5) begrenzt, die jeweils mit einem abzudichtenden Medium (6, 7) zumindest teilweise gefüllt sind, wobei in dem ersten Raum (4) ein relativ höherer Druck als in dem zweiten Raum (5) herrscht und wobei auf der dem 2. Raum (5) zugewandten Seite der Dichtung (3) ein Modul (8) zur Erfassung einer Leckage (9) der Dichtung (3) angeordnet ist, **dadurch gekennzeichnet, dass** das Modul (8) einen drosselartig ausgebildeten Strömungskanal (10) für die Leckage (9) umfasst und zumindest einen Sensor (11) zur Erfassung der Leckage (9) im Strömungskanal (10) und dass der Sensor (11) mit einer Auswerte-Einheit (12) signalleitend verbunden ist.

2. Dichtungsanordnung nach Anspruch 1, **dadurch gekennzeichnet, dass** der Strömungskanal (10) mäander- oder spiralförmig ausgebildet ist und einen Strömungseingang (13) und einen Strömungsausgang (14) aufweist.

3. Dichtungsanordnung nach einem der Ansprüche 1 oder 2, **dadurch gekennzeichnet, dass** der Sensor (11) durch einen kalorimetrischen Durchfluss-Sensor (15) gebildet ist.

4. Dichtungsanordnung nach Anspruch 3, **dadurch gekennzeichnet, dass** der Durchfluss-Sensor (15) zumindest zwei in Strömungsrichtung (16) der Leckage (9) beabstandete Temperatursensoren (17, 18) umfasst.

5. Dichtungsanordnung nach einem der Ansprüche 3 oder 4, **dadurch gekennzeichnet, dass** der Durchfluss-Sensor (15) einen elektrisch beheizbaren Hitzdraht (19) umfasst, der in Strömungsrichtung (16) zwischen den Temperatursensoren (17, 18) angeordnet ist.

6. Dichtungsanordnung nach einem der Ansprüche 3 bis 5, **dadurch gekennzeichnet, dass** der Durchfluss-Sensor (15) drei in Strömungsrichtung (16) beabstandete Temperatursensoren (17, 18, 20) umfasst und dass zwischen den einander benachbarten Temperatursensoren (17, 18, 20) jeweils ein Hitzdraht (19, 21) angeordnet ist.

7. Dichtungsanordnung nach einem der Ansprüche 1 oder 2, **dadurch gekennzeichnet, dass** der Sensor (11) als druckbetätigbare Klappe (22) ausgebildet ist und dass die Klappe (22) bei Überschreitung eines Druck-Schwellwerts im Strömungskanal (10) in Offenstellung bringbar ist.

8. Dichtungsanordnung nach einem der Ansprüche 1 oder 2, **dadurch gekennzeichnet, dass** der Sensor (11) als Differenzdrucksensor (23) ausgebildet ist.

9. Dichtungsanordnung nach einem der Ansprüche 7 oder 8, **dadurch gekennzeichnet, dass** die Klappe (22) oder der Differenzdrucksensor (23) jeweils im Bereich des Strömungsausgangs (14) des Strömungskanals (10) angeordnet sind.

10. Dichtungsanordnung, umfassend zwei Maschinenelemente (1, 2) und eine Dichtung (3), die zwischen den Maschinenelementen (1, 2) dichtend angeordnet ist, wobei die Dichtung (3) zwei gegeneinander abzudichtende Räume (4, 5) begrenzt, die jeweils mit einem abzudichtenden Medium (6, 7) zumindest teilweise gefüllt sind, wobei in dem ersten Raum (4) ein relativ höherer Druck als in dem zweiten Raum (5) herrscht und wobei auf der dem zweiten Raum (5) zugewandten Seite der Dichtung (3) ein Modul (8) zur Erfassung einer Leckage (9) der Dichtung (3) angeordnet ist, **dadurch gekennzeichnet, dass** das Modul (8) eine Differenzdruck gesteuerte Membran (24) und einen Wegsensor (25) umfasst, der mit einer Auswerte-Einheit (12) signalleitend verbunden ist und dass die Membran (24) in Richtung des Wegsensors (25) hin-und herbeweglich ausgebildet und dem Wegsensor (25) zur Erfassung des Wegs der Membran (24) benachbart zugeordnet ist.

11. Dichtungsanordnung nach Anspruch 10, **dadurch gekennzeichnet, dass** die Membran (24) aus einem elastisch nachgiebigen Werkstoff besteht.

12. Dichtungsanordnung nach einem der Ansprüche 10 oder 11, **dadurch gekennzeichnet, dass** die Membran (24) aus einem elastomeren Werkstoff besteht.

13. Dichtungsanordnung nach einem der Ansprüche 10 bis 12, **dadurch gekennzeichnet, dass** die Membran (24) einen Bestandteil der Dichtung (3) bildet.

14. Dichtungsanordnung nach Anspruch 13, **dadurch gekennzeichnet, dass** die Dichtung (3) als Radialwellendichtring (26) ausgebildet ist und dass die Membran (24) im Radialflansch (27) des Radialwellendichtrings (26) angeordnet ist.

15. Dichtungsanordnung nach einem der Ansprüche 1 bis 14, **dadurch gekennzeichnet, dass** das Modul (8) mit einem Multipolencoder basierten Geber (28) und/oder einem zugehörigen Magnetfeldsensor (29) eine vormontierbare erste Einheit (30) bildet.

16. Dichtungsanordnung nach Anspruch 15, **dadurch gekennzeichnet, dass** der Geber (28) und/oder der Magnetfeldsensor (29) auf der dem zweiten Raum (5) zugewandten Seite des Moduls (8) angeordnet sind.

17. Dichtungsanordnung nach einem der Ansprüche 15 oder 16, **dadurch gekennzeichnet, dass** der Geber (28) vom Magnetfeldsensor (29) außenumfangsseitig mit radialem Abstand umschlossen ist.

18. Dichtungsanordnung nach einem der Ansprüche 15 bis 17, **dadurch gekennzeichnet, dass** der Geber (28) zur Erfassung von Drehzahl, Drehrichtung, Absolutwinkel und/oder Drehmoment ausgebildet ist.

19. Dichtungsanordnung nach einem der Ansprüche 1 bis 18, **dadurch gekennzeichnet, dass** die Dichtung (3) als Radialwellendichtring (26) ausgebildet ist.

20. Dichtungsanordnung nach einem der Ansprüche 1 bis 19, **dadurch gekennzeichnet, dass** das Modul (8) und die Dichtung (3) eine vormontierbare zweite Einheit (31) bilden

## Geänderte Patentansprüche

### Geänderte Patentansprüche gemäss Regel 137(2) EPÜ.

**1.** Dichtungsanordnung, umfassend zwei Maschinenelemente (1, 2) und eine Dichtung (3), die zwischen den Maschinenelementen (1, 2) dichtend angeordnet ist, wobei die Dichtung (3) zwei gegeneinander abzudichtende Räume (4, 5) begrenzt, die jeweils mit einem abzudichtenden Medium (6, 7) zumindest teilweise gefüllt sind, wobei in dem ersten Raum (4) ein relativ höherer Druck als in dem zweiten Raum (5) herrscht, wobei auf der dem zweiten Raum (5) zugewandten Seite der Dichtung (3) ein Modul (8) mit zumindest einem Sensor (11) zur Erfassung einer Leckage (9) der Dichtung (3) angeordnet ist und wobei der Sensor (11) mit einer Auswerteeinheit (12) signalleitend verbunden ist, **dadurch gekennzeichnet, dass** das Modul (8) einen drosselartig sowie mäander- oder spiralförmig ausgebildeten Strömungskanal (10) mit einem Strömungseingang (13) und einem Strömungsausgang (14) für die Leckage (9) umfasst und dass der Sensor (11) im Strömungskanal (10) zwischen dem Strömungseingang (13) und dem Strömungsausgang (14) zur Erfassung der Leckage (9) angeordnet ist.

**2.** Dichtungsanordnung nach Anspruch 1, **dadurch gekennzeichnet, dass** der Sensor (11) durch einen kalorimetrischen Durchfluss-Sensor (15) gebildet ist.

**3.** Dichtungsanordnung nach Anspruch 2, **dadurch gekennzeichnet, dass** der Durchfluss-Sensor (15) zumindest zwei in Strömungsrichtung (16) der Leckage (9) beabstandete Temperatursensoren (17, 18) umfasst.

**4.** Dichtungsanordnung nach einem der Ansprüche 2 oder 3, **dadurch gekennzeichnet, dass** der Durchfluss-Sensor (15) einen elektrisch beheizbaren Hitzdraht (19) umfasst, der in Strömungsrichtung (16) zwischen den Temperatursensoren (17, 18) angeordnet ist.

**5.** Dichtungsanordnung nach einem der Ansprüche 2 bis 4, **dadurch gekennzeichnet, dass** der Durchfluss-Sensor (15) drei in Strömungsrichtung (16) beabstandete Temperatursensoren (17, 18, 20) umfasst und dass zwischen den einander benachbarten Temperatursensoren (17, 18, 20) jeweils ein Hitzdraht (19, 21) angeordnet ist.

**6.** Dichtungsanordnung nach Anspruch 1, **dadurch gekennzeichnet, dass** der Sensor (11) als druckbetätigbare Klappe (22) ausgebildet ist und dass die Klappe (22) bei Überschreitung eines Druck-Schwellwerts im Strömungskanal (10) in Offenstellung bringbar ist.

**7.** Dichtungsanordnung nach Anspruch 1 **dadurch gekennzeichnet, dass** der Sensor (11) als Differenzdrucksensor (23) ausgebildet ist.

**8.** Dichtungsanordnung nach einem der Ansprüche 6 oder 7, **dadurch gekennzeichnet, dass** die Klappe (22) oder der Differenzdrucksensor (23) jeweils im Bereich des Strömungsausgangs (14) des Strömungskanals (10) angeordnet sind.

**9.** Dichtungsanordnung nach einem der Ansprüche 1 bis 8, **dadurch gekennzeichnet, dass** das Modul (8) mit einem Multipolencoder basierten Geber (28) und/oder einem zugehörigen Magnetfeldsensor (29) eine vormontierbare erste Einheit (30) bildet.

**10.** Dichtungsanordnung nach Anspruch 9, **dadurch gekennzeichnet, dass** der Geber (28) und/oder der Magnetfeldsensor (29) auf der dem zweiten Raum (5) zugewandten Seite des Moduls (8) angeordnet sind.

**11.** Dichtungsanordnung nach einem der Ansprüche 9 oder 10, **dadurch gekennzeichnet, dass** der Geber (28) vom Magnetfeldsensor (29) außenumfangsseitig mit radialem Abstand umschlossen ist.

**12.** Dichtungsanordnung nach einem der Ansprüche 9 bis 11, **dadurch gekennzeichnet, dass** der Geber (28) zur Erfassung von Drehzahl, Drehrichtung, Absolutwinkel und/oder Drehmoment ausgebildet ist.

**13.** Dichtungsanordnung nach einem der Ansprüche 1 bis 12, **dadurch gekennzeichnet, dass** die Dichtung (3) als Radialwellendichtring (26) ausgebildet ist.

**14.** Dichtungsanordnung nach einem der Ansprüche 1 bis 13, **dadurch gekennzeichnet, dass** das Modul (8) und die Dichtung (3) eine vormontierbare zweite Einheit (31) bilden.
